# EUROPÄISCHE PATENTANMELDUNG

(11) **EP 2 966 338 A1**
(43) Veröffentlichungstag der Anmeldung: **13.01.2016**
(21) Anmeldenummer: 15175331.6
(22) Anmeldetag: 03.07.2015
(51) Int. Cl.: F21S 8/02, F21V 7/00, F21V 7/04, F21V 8/00, F21V 5/04

(54) **SCHEINWEREFER MIT EINER LICHTQUELLE**

(30) Priorität: 10.07.2014 DE 202014103178 U
(71) Anmelder: BÄ*RO GmbH & Co. KG, 42799 Leichlingen (DE)
(72) Erfinder: Khanh, Tran Quoc, 60596 Frankfurt am Main (DE)
(74) Vertreter: Albrecht, Ralf

(57) **Zusammenfassung**

Die Erfindung beschreibt eine Leuchte, insbesondere eine Downlight- und/oder Spotlight-Leuchte mit einer Lichtquelle, wobei die Lichtquelle eine LED-Anordnung (2) mit einer Mehrzahl von LEDs (2a, 2b, 2c, 2d), die eine Lichtaustrittsfläche (3) definieren, aufweist, wobei die Lichtaustrittsfläche (3) eine zentrale Teilfläche (3a) und wenigstens eine weitere, die zentrale Teilfläche (3a) ringförmig umgebende Teilfläche (3b, 3c) aufweist, jeder Teilfläche (3a, 3b, 3c) eine Gruppe von LEDs (2a, 2b, 2c, 2d) zugeordnet ist und die LED-Gruppen jeweils getrennt ansteuerbar sind oder angesteuert werden, wobei die LED-Gruppe wenigstens einer Teilfläche (3a, 3b, 3c) unterschiedlich farbige LEDs (2a, 2b, 2c, 2d) umfasst und der LED-Anordnung (2) nachgeordnet eine Abbildungsoptik vorgesehen ist, wobei der LED-Anordnung eine Mischeroptik (M) zugeordnet ist, wobei jeder Teilfläche (3a, 3b, 3c) der Lichtaustrittsfläche (3) ein eigener Abschnitt (M1, M2, M3) der Mischeroptik (M) zugeordnet ist, der das von der der Teilfläche (3a, 3b, 3c) zugeordneten LED-Gruppe abgestrahlte Licht durch Mehrfachreflektion zu einem einheitlichen Lichtspektrum homogenisiert.

## Beschreibung

Die vorliegende Erfindung betrifft eine Leuchte, insbesondere Downlight- und/oder Spotlight-Leuchte mit einer Lichtquelle.

Downlight- und Spotlight-Leuchten in der in Rede stehenden Art sind in unterschiedlichen Ausführungsformen bekannt und werden regelmäßig zur Beleuchtung von Verkaufsräumen und insbesondere zum Beleuchten der ausgestellten Waren, wie beispielweise Textilien, Büchern und Lebensmitteln, verwendet. Weiterhin werden sie zur allgemeinen Beleuchtung von Hotelbereichen, Wellnessbereichen, Fitnessstudios etc., im Bürobereich zur Beleuchtung von Tagungszimmern, Besprechungszimmern und Fluren, in der Fotografie sowie auch in der TV- und Filmbeleuchtung und Museumbeleuchtung eingesetzt.

Downlight-Leuchten werden üblicherweise an einer Raumdecke üblicherweise über entsprechende Deckenschienen installiert und umfassen ein Leuchtmittel sowie eine Abbildungsoptik mit einem Reflektor und/oder einer Linse. Üblicherweise sind mit Downlight-Leuchten, Kompaktleuchtstofflampen, Halogenglühlampen oder Entladungslampen mit unterschiedlichem Abstrahlwinkel von 6° bis etwa 60° als Leuchtmittel ausgestattet. Spotlight-Leuchten sind eher gelenkig ausgebildet. Hier kommen eher kleine Lichtquellen wie Halogenglühlampen und kleinwattige Entladungslampen zum Einsatz. In der nachfolgenden Tabelle sind die Eigenschaften herkömmlich eingesetzter Halogenglühlampen, Kompaktleuchtstofflampen und Entladungslampen mit den wesentlichen technischen Daten, d.h. der Farbtemperatur des abgestrahlten Lichts, der Leistung und des erzielbaren Lichtstroms dargestellt:

| Halogenglühlampen/ 2700K-3200K | Kompaktleuchtstofflampen 2700K oder kaltweiß | Entladungslampen | Leuchtenwirkungsgrad |
|---|---|---|---|
| 6W/ 150lm | 5W/ 300lm | 10W/ 900lm | Etwa 60-80% wegen der großen Lichtquellen und der Selbstabsorption durch die Lampenkolben |
| 12W/ 300lm | 7W/ 420lm | 20W/ 1800lm | |
| 20W/ 500lm | 11W/ 660lm | 100W/ 9.000lm | |
| | 15W/ 900lm | 200W/18.000lm | |
| | 20W/ 1.200lm | | |

Die bekannten Downlight- und Spotlight-Leuchten haben sich in der Praxis bewährt. Ein Problem besteht allerdings darin, dass die Lebensdauer der eingesetzen Lichtquellen vergleichsweise gering ist. So liegt die Lebensdauer von Kompaktleuchtstofflampen im Bereich von 10.000 bis 12.000 Stunden, von Halogenglühlampen bei 1.500 Stunden und von Entladungslampen wie CDM- oder HCL-Lampen bei 12.000 bis 16.000 Stunden. Weiterhin wird als nachteilig angesehen, dass der Lichtstrom der bekannten Lichtquellen in der Regel nicht regelbar und/oder dimmbar ist. Ferner liegt der Farbwiedergabeindex Ra bei Halogenglühlampen und Entladungslampen zwar über 88. Bei Kompaktleuchtstofflampen hingegen liegt der Farbwiedergabeindex Ra nur bei 80 bis 83 mit einer niedrigen Farbwiedergabe für blaue und rote Oberflächenfarben.

Außerdem sind der Farbort und die ähnlichste Farbtemperatur der bekannten Lichtquellen im Wesentlichen nicht einstellbar, verändern sich jedoch mit der Alterung der Lampe in ungewollter Weise. Schließlich ist für eine Geometrie und Größe einer vorgegebenen Lichtquelle der Abstrahlwinkel fest (zum Beispiel entweder 10° oder 60°). Wenn der Abstrahlwinkel geändert werden soll, ist es erforderlich, eine andere Abbildungsoptik, d.h. andere Reflektoren oder Linsen mit unterschiedlichen Brennweiten einzusetzen.

Aufgabe der vorliegenden Erfindung ist daher, eine Leuchte der eingangs genannten Art so auszugestalten, dass sie universal einsetzbar ist. Insbesondere soll es möglich sein, ohne aufwändige Umrüstarbeiten mit einer Leuchte verschiedene Abstrahlwinkel zu realisieren. Dabei sollen mit der Leuchte unterschiedliche Lichtströme realisierbar sein. Ebenso soll die Möglichkeit geschaffen werden, unterschiedliche ähnlichste Farbtemperaturen zu realisieren, wobei die Farbsättigung einzelner Warengruppen variabel sein und ein hoher Farbwiedergabeindex erreicht werden soll. Unterschiedliche Lichtstärkenverteilungen (LVK-Kurven) sollen ebenfalls problemlos möglich sein.

Diese Aufgabe ist erfindungsgemäß bei einer Leuchte der eingangs genannten Art dadurch gelöst, dass die Lichtquelle eine LED-Anordnung mit einer Mehrzahl von LEDs, die eine Lichtaustrittsfläche definieren, aufweist, wobei die Lichtaustrittsfläche eine zentrale Teilfläche und wenigstens eine weitere, die zentrale Teilfläche ringförmig umgebende Teilfläche aufweist, jeder Teilfläche eine Gruppe von LEDs zugeordnet ist und die LED-Gruppen jeweils getrennt ansteuerbar sind oder angesteuert werden, wobei die LED-Gruppe wenigstens einer Teilfläche unterschiedlich farbige LEDs umfasst und insbesondere die LED-Gruppen aller Teilflächen unterschiedlich farbige und weiße LEDs umfassen, und der LED-Anordnung nach geordnet eine Abbildungsoptik vorgesehen ist, der LED-Anordnung eine Mischeroptik zugeordnet ist, in welche die LED-Anordnung Licht einstrahlt, wobei jeder Teilfläche der Lichtaustrittsfläche ein eigener Abschnitt der Mischeroptik zugeordnet ist, der das von der der Teilfläche zugeordneten LED-Gruppe abgestrahlte Licht durch Mehrfachreflektion zu einem einheitlichen Lichtspektrum homogenisiert, wobei die Abbildungsoptik der Mischeroptik nach geordnet ist und einen Reflektor und/oder wenigstens eine Linse aufweist.

Der Erfindung liegt zunächst die Überlegung zugrunde, als Lichtquelle eine LED-Anordnung mit einer Mehrzahl von LEDs, die eine Lichtaustrittsfläche definieren, zu verwenden. Derartige LEDs besitzen eine hohe Lebensdauer. Ferner ist mit einer LED-Anordnung der Lichtstrom beispielsweise durch Stromdämmung oder Pulsweitenmodulation (PWM) zwischen 0% und 100% stufenlos dimmbar.

Weiterhin ist erfindungsgemäß die Lichtaustrittsöffnung aufgeteilt in eine zentrale Teilfläche, der eine LED-Gruppe zugeordnet ist, und weitere Teilflächen, denen ebenfalls jeweils eine LED-Gruppe zugeordnet ist und welche die zentrale Teilfläche ringförmig umgeben. Prinzipiell ist es ausreichend, wenn die zentrale Teilfläche nur von einer einzigen ringförmigen Teilfläche umgeben ist. Es können aber auch mehrere ringförmige Teilflächen vorgesehen sein. Dabei sind die Teilflächen bevorzugt konzentrisch zueinander angeordnet, wobei zweckmäßigerweise die zentrale Teilfläche vollkreisförmig und die ringförmigen Teilflächen dann entsprechend kreisringförmig ausgebildet sind.

Es ist ferner vorgesehen, dass der LED-Anordnung eine Mischeroptik zugeordnet ist, in welche die LED-Anordnung Licht einstrahlt, wobei jeder Teilfläche der Lichtaustrittsfläche ein eigener Abschnitt der Mischeroptik zugeordnet ist, der das von der der Teilfläche zugeordneten LED-Gruppe abgestrahlte Licht durch Mehrfachreflektion zu einem einheitlichen Lichtspektrum homogenisiert.

Dem liegt die Überlegung zugrunde, das Licht, welches von den LED-Gruppen abgestrahlt wird, jeweils durch Mehrfachreflektion zu einem einheitlichen Lichtspektrum zu homogenisieren, so dass im Bereich der Lichtausgangsfläche der Mischeroptik mehrere, in sich homogenisierte Teillichtströme austreten. Die LEDs werden dabei bevorzugt so angesteuert, dass an den Teilflächen der Lichtausgangsfläche der Mischeroptik jeweils Licht gleichen Farborts und gleichen Farbspektrums austritt, also insofern identische Teillichtströme erzeugt werden.

Durch die Mischeroptik wird insbesondere das von den unterschiedlich farbigen LEDs emittierte Licht unterschiedlicher Farben durch Mehrfachreflexion zu einem gesamtem Spektrum homogenisiert.

Die Mischeroptik kann in vorteilhafter Ausgestaltung durch Röhren gebildet werden, welche die Teilflächen der Lichtaustrittsöffnung der LED-Anordnung umgeben, sich insbesondere in der Hauptlichtaustrahlrichtung der der jeweiligen Teilfläche zugeordneten LED-Gruppe erstrecken, und reflektierende Wandungen besitzen, wobei die Mischeroptik eine Lichtausgangsfläche mit Teilflächen, die zu den Teilflächen der Lichtaustrittsfläche der LED-Anordnung korrespondieren, definiert. Die Röhren der Mischeroptik sind bevorzugt zylinderförmig ausgebildet und konzentrisch zueinander angeordnet. Die reflektierenden Wandungen der Röhren der Mischeroptik können dabei als weiße, diffus reflektierende Flächen ausgebildet sein.

Der LED-Anordnung und der Mischeroptik nachgeordnet ist erfindungsgemäß eine Abbildungsoptik mit einem Reflektor und/oder wenigstens einer Linse vorgesehen. Die Abbildungsoptik ist zweckmäßiger Weise derart ausgebildet und angeordnet, dass von den LEDs aller Teilflächen emittiertes Licht durch diese gebündelt werden kann. Dabei weist die Abbildungsoptik insbesondere ein Licht bündelndes optisches Element mit einer vorgegebenen Brennweite, wie einen Reflektor oder ein Linse auf, der oder die derart ausgestaltet und angeordnet ist, dass mittels diesem von den LEDs aller Teilflächen emittiertes Licht gebündelt werden kann.

Die Anordnung ist in vorteilhafter Ausgestaltung so getroffen, dass die Lichtausgangsfläche der Mischeroptik einer Lichteintrittsöffnung der Abbildungsoptik, insbesondere eines Reflektors dieser, zugeordnet ist, so dass das die Mischeroptik verlassende Licht durch die Lichteintrittsöffnung in die Abbildungsoptik, insbesondere den Reflektor dieser eingestrahlt wird.

Die Abbildungsoptik kann dabei in an sich bekannter Weise ausgebildet sein, um eine gewünschte Lichtverteilungskurve zu erzeugen.

Die den Teilflächen zugeordneten LED-Gruppen sind ferner getrennt voneinander ansteuerbar. Auf diese Weise wird die Möglichkeit eröffnet, den Abstrahlwinkel zu verändern, indem nur die LED-Gruppe einer Teilfläche oder gleichzeitig die LED-Gruppen mehrerer Teilflächen aktiviert werden. Durch das zu- oder wegschalten wird dabei diejenige Fläche, durch welche Licht in die der LED-Anordnung und der Mischeroptik nachgeordnete Abbildungsoptik eingestrahlt wird, verändert, was wiederum dazu führt, dass sich der Abstrahlwinkel, mit welchem das Licht aus der Abbildungsoptik austritt, verändert.

Dabei tritt konkret das von den LEDs der jeweiligen Teilfläche emittierte Licht in den dieser zugeordneten Abschnitt der Mischeroptik ein, wird insbesondere durch Mehrfachreflexion durchmischt und wird durch die jeweilige Teilfläche der Lichtausgangsfläche der Mischeroptik in die der Mischeroptik nachgeordnete Abbildungsoptik eingestrahlt.

Werden zum Beispiel die LEDs einer äußeren Teilfläche deaktiviert, wird die Größe der Fläche, durch welche Licht in die Abbildungsoptik eingestrahlt wird verkleinert, was dazu führt, dass auch der Abstrahlwinkel verkleinert wird. Den geringsten Abstrahlwinkel erhält man, wenn nur die LEDs der zentralen Teilfläche angeschaltet sind. Umgekehrt wird, wenn die LEDs einer oder mehrerer die zentrale Teilfläche umgebenden weiteren Teilflächen aktiviert werden, die Fläche, von welcher Licht emittiert wird und somit die Fläche, über welche Licht in die Abbildungsoptik eingestrahlt wird, vergrößert, was in einen größeren Abstrahlwinkel resultiert.

Wenn etwa nur die LED-Gruppe der zentralen, insbesondere vollkreisförmigen Teilfläche aktiviert wird, wird ein fester Abstrahlwinkel α von beispielsweise 6° oder 10° erzielt. Wenn der Abstrahlwinkel vergrößert werden soll, wird die zu der zentralen Teilfläche benachbarte ringförmige Teilfläche oder zusätzlich die LED-Gruppe einer noch weiter außenliegenden Teilfläche aktiviert.

Durch die unterschiedlichen Beströmungen oder durch unterschiedliche PWM-Verhältnisse für unterschiedliche ringförmige Teilflächen können auch unterschiedliche LVKs realisiert werden.

Erfindungsgemäß ist weiterhin vorgesehen, dass die LED-Gruppe wenigstens einer Teilfläche unterschiedlich farbige und weiße (phosphor-konvertierte) LEDs umfasst und insbesondere die LED-Gruppen aller Teilflächen unterschiedlich farbige und weiße (phosphor-konvertierte) LEDs umfassen.

Dabei bilden die gleichfarbigen LEDs jeweils einer LED-Gruppe gemäß einer bevorzugten Ausführungsform eine LED-Farbgruppe, wobei die LED-Farbgruppen getrennt voneinander ansteuerbar sind oder angesteuert werden. Durch die separate Ansteuerbarkeit der LED-Farbgruppen wird die Möglichkeit geschaffen, unterschiedliche gewünschte ähnlichste Farbtemperaturen zwischen 2.500K und 6.500K, vorzugsweise im Bereich von 3.000K bis 4.000K einzustellen. Mit der Dimmung oder Verstärkung der LED-Farbgruppen kann auch die Farbsättigung einzelner Farbgruppen (beispielsweise Lebensmittel in der Lebensmittelbeleuchtung oder der Hautton von Personen in der Fotografie-Beleuchtung) variiert werden.

Es kann vorgesehen sein, dass als unterschiedlich farbige LEDs solche LEDs zum Einsatz kommen, die primär Licht verschiedener Farben emittieren. Alternativ können zumindest einige der LEDs mit geeigneten Leuchtstoffen bzw. Leuchtstoffgemischen versehen sein, um die verschiedenen Farben zu erhalten.

So ist gemäß einer weiteren Ausführungsform vorgesehen, dass die unterschiedlich farbigen LEDs derart ausgebildet sind, dass sie alle primär Licht der gleichen Farbe, insbesondere alle ultraviolettes oder alle blaues Licht emittieren, wobei zumindest einige der unterschiedlich farbigen LEDs jeweils mit einem Leuchtstoff oder einem Leuchtstoffgemisch versehen sind, der oder das ausgebildet ist, um das von der jeweiligen LED primär emittierte Licht in blaues oder grünes oder rotes oder gelbes oder oranges Licht zu konvertieren.

Dabei kommt als Leuchtstoff beispielsweise ein Phosphor zum Einsatz. Beispielsweise können zur Realisierung der drei Grundfarben grün, rot und blau insbesondere einige LEDs mit einem grünen Phosphor und einige der LEDs mit einem roten Phosphor versehen sein. Für blaues Licht können auch blaue LEDs ohne Leuchtstoff verwendet werden.

Alternativ oder zusätzlich kann ferner vorgesehen sein, dass die weißen LEDs derart ausgebildet sind, dass sie alle primär Licht der gleichen Farbe, insbesondere alle ultraviolettes oder alle blaues Licht emittieren, wobei die weißen LEDs jeweils mit einem Leuchtstoff oder einem Leuchtstoffgemisch versehen sind, der oder das ausgebildet ist, um das von der jeweiligen LED primär emittierte Licht in weißes Licht zu konvertieren.

Zumindest einige der unterschiedlich farbigen LEDs und/oder die weißen LEDs können darüber hinaus in vorteilhafter Ausgestaltung als vollkonvertierte Leuchtstoff-LEDs ausgebildet sein. Das bedeutet, dass das von den LEDs primär emittierte Licht, bei welchem es sich insbesondere um ultraviolettes oder blaues Licht handelt, je nachdem, welche Art von Halbleiter-LEDs zum Einsatz kommt, vollständig mittels des vorgesehenen Leuchtstoffes oder der vorgesehenen Leuchtstoffmischung in längerwelliges Licht konvertiert wird.

Es können insbesondere alle der unterschiedlich farbigen LEDs, die mit einem Leuchtstoff bzw. Leuchtstoffgemisch versehen sind, als vollkonvertierte Leuchtstoff-LEDs ausgebildet sein.

Die unterschiedlich farbigen LEDs können innerhalb der jeweiligen Teilfläche der Lichtaustrittsfläche prinzipiell auf beliebige Weise angeordnet sein.

Nachfolgend wird ein Ausführungsbeispiel der vorliegenden Erfindung unter Bezugnahme auf die beiliegende Zeichnung verwiesen. In der Zeichnung zeigt:
- Fig. 1: in schematischer Darstellung eine Leuchte gemäß der vorliegenden Erfindung,
- Fig. 2: eine schematische Schnittdarstellung der in Figur 1 dargestellten erfindungsgemäßen Leuchte mit dargestellter Abbildungsoptik, und
- Fig. 3: eine schematische Darstellung der Strahlführung durch eine Sammellinse für zwei unterschiedliche Große lichtabstrahlende Flächen.

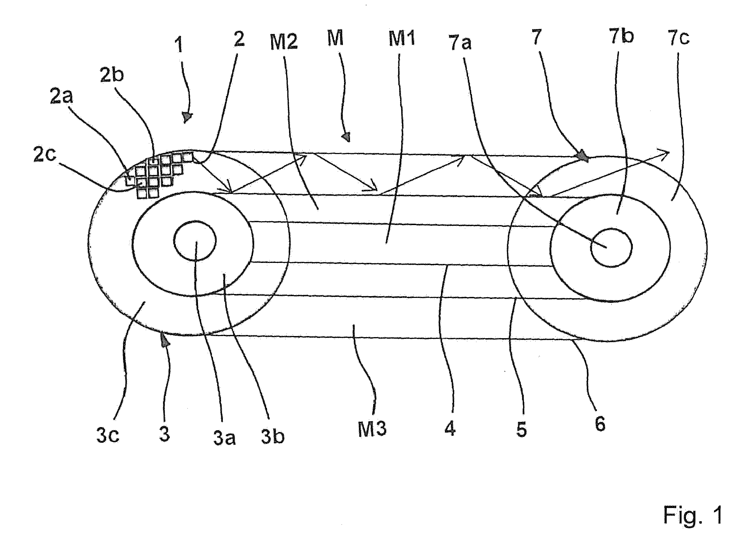

Bei der in der Figur 1 dargestellten Leuchte handelt es sich um eine Downlight- und/oder Spotlight-Leuchte mit einer Lichtquelle 1, die eine LED-Anordnung 2 mit einer Mehrzahl von LEDs 2a, 2b, 2c, 2d umfasst, die eine Lichtaustrittsfläche 3 definieren. Die Lichtaustrittsfläche 3 ist dabei in mehrere Teilflächen 3a, 3b, 3c unterteilt und umfasst eine zentrale, vollkreisförmig ausgebildete Teilfläche 3a, und zwei weitere kreisringförmige Teilflächen 3b, 3c, welche konzentrisch zu der zentralen Teilfläche 3a angeordnet sind und diese umgeben. Die Teilflächen 3a, 3b, 3c bilden somit eine zielscheibenähnliche Anordnung. Die LEDs 2a, 2b, 2c, 2d, welche die Lichtaustrittsfläche 3 im Wesentlichen vollständig bestücken, sind dabei in den Teilflächen 3a, 3b, 3c zugeordnete LED-Gruppen unterteilt, die jeweils getrennt ansteuerbar angesteuert werden. Hierzu umfasst die LED-Anordnung 2 eine entsprechende Steuereinheit, die im Einzelnen nicht dargestellt ist.

Die LEDs 2a, 2b, 2c, 2d jeder LED-Gruppe umfassen unterschiedlich farbige und weiße phosphor-konvertierte LEDs.

In dem vorliegenden Ausführungsbeispiel sind rote LEDs 2a, grüne LEDs 2b und blaue LEDs 2c entsprechend einem RGB-Farbraum vorgesehen. Zusätzlich sind auch weiße phosphor-konvertierte LEDs 2d vorhanden. Die Anordnung ist dabei so getroffen, dass die gleichfarbigen LEDs 2a, 2b, 2c, 2d jeweils einer LED-Gruppe eine LED-Farbgruppe bilden und die LED-Farbgruppen getrennt voneinander angesteuert werden. Durch die separate Ansteuerbarkeit der LED-Farbgruppen wird die Möglichkeit geschaffen, unterschiedliche gewünschte ähnlichste Farbtemperaturen zwischen 2.500K und 6.500K, vorzugsweise im Bereich von 3.000K bis 4.000K einzustellen. Mit der Dimmung oder Verstärkung der LED-Farbgruppen kann auch die Farbsättigung einzelner Farbgruppen (beispielsweise Lebensmittel in der Lebensmittelbeleuchtung oder der Hautton von Personen in der Fotografie-Beleuchtung) variiert werden.

Der LED-Anordnung 1 ist eine Mischeroptik M zugeordnet, in welche die LED-Anordnung 2 Licht einstrahlt, wobei jeder Teilfläche 3a, 3b, 3c der Lichtaustrittsfläche 3 ein eigener Abschnitt M1, M2, M3 der Mischeroptik M zugeordnet ist. Die Abschnitte M1, M2, M3 der Mischeroptik M werden dabei durch die konzentrisch angeordnete, zylindrische Röhren 4, 5, 6 gebildet, welche die Teilflächen 3a, 3b, 3c der Lichtaustrittsfläche 3 der LED-Anordnung 2 umgeben, so dass die einzelnen Abschnitte M1, M2, M3 der Mischeroptik M entsprechend der Teilflächen 3a, 3b, 3c voneinander getrennt und abgeschlossen sind.

An ihrer Rückseite definiert die Mischeroptik M eine Lichteintrittsfläche, durch welche die LED-Anordnung 2 Licht in die Mischeroptik M einstrahlt, und an ihrer Vorderseite definiert die Mischeroptik M eine Lichtausgangsfläche 7 mit zu den Teilflächen 3a, 3b, 3c der Lichtaustrittsfläche 3 der LED-Anordnung 2 korrespondierenden Teilflächen 7a, 7b, 7c, d.h. einer zentralen, kreisrunden Teilfläche 7a und zwei die zentrale Teilfläche 7a umgebenden und konzentrisch zu dieser angeordneten kreisringförmigen Teilflächen 7b, 7c.

Die konzentrisch zueinander angeordneten zylindrischen Röhren 4, 5, 6 der Mischeroptik M besitzen reflektierende Wandungen, die hier als weiße, diffus reflektierende Flächen ausgebildet sind und dazu dienen, das in die Abschnitte M1, M2, M3 der Mischeroptik M eingestrahlt Licht durch Mehrfachreflektionen, wie sie durch einen Pfeil in der Zeichnung angedeutet ist, zu einem einheitlichen Lichtspektrum zu homogenieren. Die LEDs 2a, 2b, 2c, 2d werden dabei derart angesteuert, dass an den Teilflächen 7a, 7b, 7c der Lichtausgangsfläche 7 jeweils Licht gleichen Farborts und gleichen Farbspektrums austritt.

In der Figur 1 nicht dargestellt ist, dass der Mischeroptik M nachgeordnet eine Abbildungsoptik mit einem Reflektor und/oder wenigstens einer Linse vorgesehen ist.

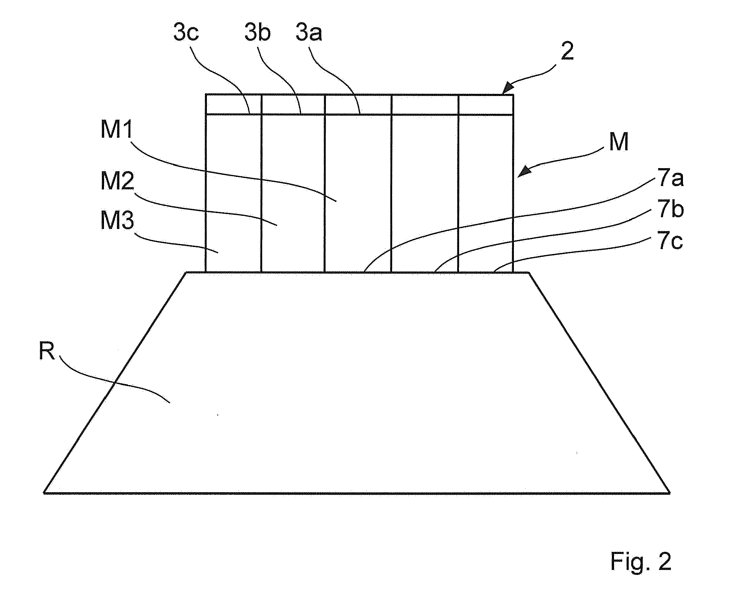

Der Aufbau der in Figur 1 gezeigten erfindungsgemäßen Leuchte mit dargestellter Abbildungsoptik kann der Figur 2 entnommen werden, welche eine schematische Schnittdarstellung der Leuchte aus Figur 1 zeigt. Konkret ist in der Figur 2 die LED-Anordnung 2 gezeigt, an welche sich die Mischeroptik M unmittelbar anschließt, welcher wiederum eine Abbildungsoptik nachgeordnet ist, die bei dem dargestellten Ausführungsbeispiel durch einen Reflektor R mit definierter Brennweite f gebildet wird. Der Reflektor R schließt sich unmittelbar an die Mischeroptik M an.

Die Anordnung ist dabei so getroffen, dass das die Mischeroptik M verlassende Licht in den Reflektor R eingestrahlt und durch diesen auf eine in der Figur nicht dargestellte zu beleuchtende Fläche verteilt wird. Konkret ist die Anordnung derart, dass die Lichtausgangsfläche 7 der Mischeroptik M einer Lichteintrittsöffnung der durch den Reflektor R gebildeten Abbildungsoptik zugeordnet ist, welche sich an der in Figur 2 nach oben weisenden Oberseite des reflektors R befindet. Das die Mischeroptik M verlassende Licht wird somit durch die oberseitige Lichteintrittsöffnung in den Reflektor R eingestrahlt. Durch den Reflektor R ist somit Licht, welches von den LEDs sämtlicher Teilflächen 3a, 3b, 3c emittiert und durch die Mischeroptik M in jedem der Abschnitte M1, M2, M3 gemischt wird, bündelbar.

Die den Teilflächen 3a, 3b, 3c zugeordneten LED-Gruppen sind ferner getrennt voneinander ansteuerbar. Auf diese Weise wird die Möglichkeit eröffnet, den Abstrahlwinkel des Lichtes aus dem Reflektor der Abbildungsoptik zu verändern, indem nur die LED-Gruppe einer Teilfläche 3a, 3b, 3c oder gleichzeitig die LED-Gruppen mehrerer Teilflächen 3a, 3b, 3c aktiviert werden. Durch das zuoder wegschalten wird dabei diejenige Fläche, durch welche Licht in die der LED-Anordnung und der Mischeroptik M nachgeordnete Abbildungsoptik eingestrahlt wird, verändert, was wiederum dazu führt, dass sich der Abstrahlwinkel, mit welchem das Licht aus dem Reflektor R der Abbildungsoptik austritt, verändert.

Werden zum Beispiel die LEDs einer der beiden äußeren Teilfläche 3b, 3c deaktiviert, wird die Größe der Fläche, durch welche Licht in die durch den Reflektor R gebildete Abbildungsoptik eingestrahlt wird verkleinert, was dazu führt, dass auch der Abstrahlwinkel verkleinert wird. Den geringsten Abstrahlwinkel erhält man, wenn nur die LEDs der zentralen Teilfläche 3a angeschaltet sind. Umgekehrt wird, wenn die LEDs einer oder beider der die zentrale Teilfläche 3a umgebenden weiteren Teilflächen 3b, 3c aktiviert werden, die Fläche, von welcher Licht emittiert wird und somit die Fläche, über welche Licht in den die Abbildungsoptik bildenden Reflektor R eingestrahlt wird, vergrößert, was in einen größeren Abstrahlwinkel resultiert.

Wenn etwa nur die LED-Gruppe der zentralen Teilfläche 3a aktiviert wird, wird bei dem dargestellten Ausführungsbeispiel ein fester Abstrahlwinkel α von 6° erzielt. Licht tritt dann nur über die zu der Teilfläche 3a korrespondierende Teilfläche 7a der Lichtausgangsfläche 7 der Mischeroptik M in den Reflektor R der nachgeordneten Abbildungsoptik ein.

Wenn der Abstrahlwinkel vergrößert werden soll, wird die zu der zentralen Teilfläche 3a benachbarte ringförmige Teilfläche 3b oder zusätzlich die LED-Gruppe der noch weiter außen liegenden Teilfläche 3c aktiviert. Dann tritt Licht auch durch die Teilfläche 7b und die Teilfläche 7c der Lichtausgangsfläche 7 der Mischeroptik M in den Reflektor R der Abbildungsoptik ein, wodurch ein größerer Abstrahlwinkel erhalten wird.

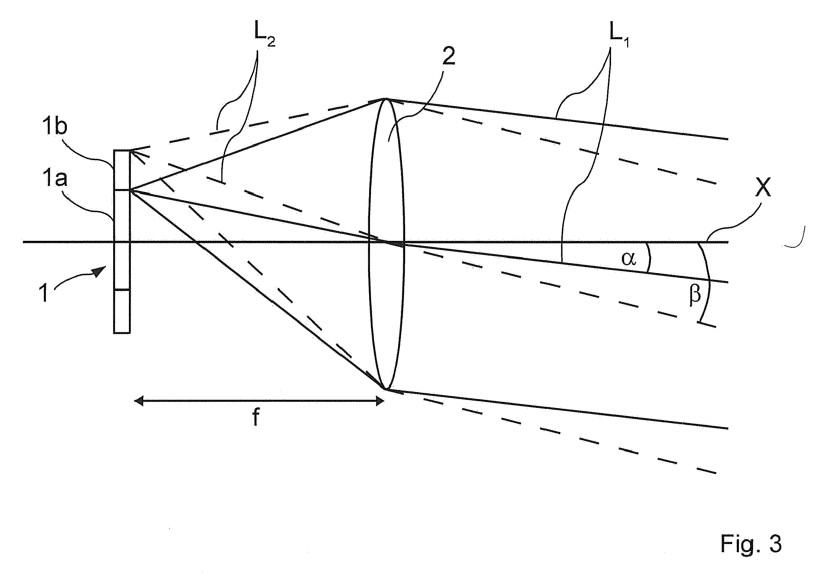

Das zugrundeliegende Prinzip ist in der Figur 3 am Beispiel einer Linse als Abbildungsoptik dargestellt. Die Figur 3 zeigt in der Schnittdarstellung rein schematisch eine lichtabstrahlende Fläche 1, welche in einen zentrale, kreisförmige Teilfläche 1a und eine die zentrale Teilfläche 1a umgebende kreisringförmige Teilfläche 1b unterteilt ist. Der lichtabstrahlenden Fläche 1 nachgeordnet ist eine Linse 2 der Brennweite f, welche derart ausgebildet und angeordnet ist, dass von beiden Teilflächen 1a, 1b abgestrahltes Licht durch die Linse 1 gebündelt werden kann. Zentral durch die lichtabstrahlende Fläche 1 sowie die Linse 2 verläuft die optische Achse X.

In der Figur 3 ist beispielhaft der Strahlengang für den obersten Punkt der zentralen Teilfläche 1a in durchgezogenen Linien L₁ und beispielhaft der Strahlengang für den obersten Punkt der die zentrale Teilfläche 1a umgebenden weiteren Teilfläche 1b in gestrichelten Linien L₂ dargestellt.

Wie aus der schematischen Darstellung in Figur 3 hervorgeht, wird für den Fall, dass Licht nur von der zentralen Teilfläche 1a abgestrahlt wird, der Abstrahlwinkel α für das mittels der Linse 2 gesammelte Licht erhalten. Wird die lichtabtrahlende Fläche vergrößert, indem auch von der weiteren Teilfläche 1b Licht emittiert wird, erhält man hingegen den größeren Abstrahlwinkel β.

Der in der Figur 3 rein schematisch dargestellt Effekt tritt bei der erfindungsgemäßen Leuchte, bei welcher die den Teilflächen 3a, 3b, 3c zugeordneten LED-Gruppen getrennt voneinander ansteuerbar sind, in gleicher Weise auf, wobei bei dem dargestellten Ausführungsbeispiel anstelle einer Linse ein Reflektor zum Einsatz kommt, mittels dem von allen Teilflächen 3a, 3b, 3c emittiertes Licht sammelbar ist. Kommt anstelle einer Linse ein Reflektor zum Einsatz, in welchen das von den LEDs aller Teilflächen emittierte Licht einstrahlt, gilt das in Figur 2 rein schematisch veranschaulichte Prinzip gleichermaßen.

Alternativ zu dem dargestellten Ausführungsbeispiel, bei dem rote LEDs 2a, grüne LEDs 2b und blaue LEDs 2c vorgesehen sind, können die unterschiedlich farbigen LEDs auch derart ausgebildet sein, dass sie alle primär Licht der gleichen Farbe, insbesondere alle ultraviolettes oder alle blaues Licht emittieren, und zumindest einige der unterschiedlich farbigen LEDs jeweils mit einem Leuchtstoff oder einem Leuchtstoffgemisch versehen sind, der oder das ausgebildet ist, um das von der jeweiligen LED primär emittierte Licht in blaues oder grünes oder rotes oder gelbes oder orangenes Licht zu konvertieren.

Konkret können beispielsweise alle unterschiedlich farbigen LEDs als blaue LEDs ausgebildet sein, also blaues Licht primär emittieren und es können einige der blauen LEDs mit einem Leuchtstoff bzw. Leuchtstoffgemisch versehen sein, über welchen bzw. welches das blaue Licht in grünes Licht konvertiert wird. Als Leuchtstoff kann beispielsweis ein grüner Phosphor zum Einsatz kommen. In gleicher Weise können einige der primär im Blauen emittierenden LEDs mit einem Leuchtstoff bzw. Leuchtstoffgemisch versehen sein, über welchen bzw. welches das blaue Licht in rotes Licht konvertiert wird. Die verbleibenden LEDs sind nicht mit einem Leuchtstoff bzw. Leuchtstoffgemisch versehen.

Dabei kann insbesondere vorgesehen sein, dass ein Drittel der Gesamtanzahl der unterschiedlich farbigen, insbesondere primär im Blauen emittierenden LEDs mit einem ins Grüne konvertierenden Leuchtstoff bzw. Leuchtstoffgemisch versehen ist, ein Drittel der Gesamtanzahl der unterschiedlich farbigen, insbesondere primär im Blauen emittierenden LEDs mit einem ins Rote konvertierenden Leuchtstoff bzw. Leuchtstoffgemisch versehen ist und ein Drittel keinen Leuchtstoff bzw. kein Leuchtstoffgemisch aufweist. So stehen für jede der drei Grundfarben gleich viele LEDs zur Verfügung.

Darüber hinaus können alternativ oder zusätzlich die weißen LEDs derart ausgebildet sein, dass sie alle primär Licht der gleichen Farbe, insbesondere alle ultraviolettes oder alle blaues Licht emittieren, wobei die weißen LEDs jeweils mit einem Leuchtstoff oder einem Leuchtstoffgemisch versehen sind, der oder das ausgebildet ist, um das von der jeweiligen LED primär emittierte Licht in weißes Licht zu konvertieren.

Die unterschiedlich farbigen LEDs und/oder die weißen LEDs können darüber hinaus in vorteilhafter Ausgestaltung als vollkonvertierte Leuchtstoff-LEDs ausgebildet sein, so dass das primär von diesen emittierte Licht mittels des Leuchtstoffes bzw. Leuchtstoffgemisches vollständig in längerwelliges Licht konvertiert wird.

## Patentansprüche

1. Leuchte, insbesondere Downlight- und/oder Spotlight-Leuchte mit einer Lichtquelle, **dadurch gekennzeichnet, dass** die Lichtquelle eine LED-Anordnung (2) mit einer Mehrzahl von LEDs (2a, 2b, 2c, 2d), die eine Lichtaustrittsfläche (3) definieren, aufweist, wobei die Lichtaustrittsfläche (3) eine zentrale Teilfläche (3a) und wenigstens eine weitere, die zentrale Teilfläche (3a) ringförmig umgebende Teilfläche (3b, 3c) aufweist, jeder Teilfläche (3a, 3b, 3c) eine Gruppe von LEDs (2a, 2b, 2c, 2d) zugeordnet ist und die LED-Gruppen jeweils getrennt ansteuerbar sind oder angesteuert werden, wobei die LED-Gruppe wenigstens einer Teilfläche (3a, 3b, 3c) unterschiedlich farbige LEDs (2a, 2b, 2c, 2d) umfasst und insbesondere die LED-Gruppen aller Teilflächen (3a, 3b, 3c) unterschiedlich farbige und weiße LEDs umfassen, und der LED-Anordnung (2) nachgeordnet eine Abbildungsoptik vorgesehen ist, der LED-Anordnung eine Mischeroptik (M) zugeordnet ist, in welche die LED-Anordnung (2) Licht einstrahlt, wobei jeder Teilfläche (3a, 3b, 3c) der Lichtaustrittsfläche (3) ein eigener Abschnitt (M1, M2, M3) der Mischeroptik (M) zugeordnet ist, der das von der der Teilfläche (3a, 3b, 3c) zugeordneten LED-Gruppe abgestrahlte Licht durch Mehrfachreflektion zu einem einheitlichen Lichtspektrum homogenisiert, und wobei die Abbildungsoptik der Mischeroptik (M) nach geordnet ist und einen Reflektor (R) und/oder wenigstens eine Linse aufweist.

2. Leuchte nach Anspruch 1, **dadurch gekennzeichnet, dass** die Ausbildung so getroffen ist, dass durch das Zuschalten und/oder Abschalten von einer oder mehreren LED-Gruppen unterschiedliche Abstrahlwinkel realisiert werden.

3. Leuchte nach Anspruch 1 oder 2, **dadurch gekennzeichnet, dass** die Anordnung so getroffen ist, dass die Lichtausgangsfläche der Mischeroptik (M) einer Lichteintrittsöffnung eines Reflektors (R) der Abbildungsoptik zugeordnet ist, so dass das die Mischeroptik (M) verlassende Licht durch die Lichteintrittsöffnung in den Reflektor (R) eingestrahlt wird.

4. Leuchte nach einem der vorhergehenden Ansprüche, **dadurch gekennzeichnet, dass** die Abschnitte (M1, M2, M3) der Mischeroptik (M) durch Röhren (4, 5, 6) gebildet werden, welche die Teilflächen (3a, 3b, 3c) der Lichtaustrittsfläche (3) der LED-Anordnung (2) umgeben, sich insbesondere in der Hauptlichtaustrahlrichtung der der jeweiligen Teilfläche (3a, 3b, 3c) zugeordneten LED-Gruppe erstrecken und reflektierende Wandungen besitzen, wobei die Mischeroptik (M) eine Lichtausgangsfläche (7) mit Teilflächen (7a, 7b, 7c), die zu den Teilflächen (3a, 3b, 3c) der Lichtaustrittsfläche (3) der LED-Anordnung (1) korrespondieren, definiert.

5. Leuchte nach Anspruch 4, **dadurch gekennzeichnet, dass** die Röhren (4, 5, 6) der Mischeroptik (M) zylinderförmig ausgebildet und konzentrisch zueinander angeordnet sind.

6. Leuchte nach Anspruch 4 oder 5, **dadurch gekennzeichnet, dass** die reflektierenden Wandungen der Röhren (4, 5, 6) der Mischeroptik (M) als weiße, diffus reflektierende Flächen ausgebildet sind.

7. Leuchte nach einem der vorhergehenden Ansprüche, **dadurch gekennzeichnet, dass** die Teilflächen (3a, 3b, 3c) konzentrisch zueinander angeordnet sind.

8. Leuchte nach einem der Ansprüche 4 bis 7, **dadurch gekennzeichnet, dass** die LEDs (2a, 2b, 2c, 2d) derart angesteuert werden, dass an den Teilflächen (7a, 7b, 7c) der Lichtausgangsfläche (7) der Mischeroptik (M) jeweils Licht gleichen Farborts und gleichen Farbspektrums austritt.

9. Leuchte nach einem der vorhergehenden Ansprüche, **dadurch gekennzeichnet, dass** die zentrale Teilfläche (3a) vollkreisförmig ausgebildet ist.

10. Leuchte nach Anspruch 9, **dadurch gekennzeichnet, dass** die wenigstens eine, die zentrale Teilfläche (3a) ringförmig umgebende Teilfläche (3b, 3c) kreisringförmig ausgebildet ist.

11. Leuchte nach einem der vorhergehenden Ansprüche, **dadurch gekennzeichnet, dass** die gleichfarbigen LEDs (2a, 2b, 2c, 2d) jeweils einer LED-Gruppe eine LED-Farbgruppe bilden und die LED-Farbgruppen getrennt voneinander ansteuerbar sind oder angesteuert werden.

12. Leuchte nach einem der vorhergehenden Ansprüche, **dadurch gekennzeichnet, dass** die unterschiedlich farbigen LEDs (2a, 2b, 2c, 2d) derart ausgebildet sind, dass sie alle primär Licht der gleichen Farbe, insbesondere alle ultraviolettes oder alle blaues Licht emittieren, wobei zumindest einige der unterschiedlich farbigen LEDs (2a, 2b, 2c) jeweils mit einem Leuchtstoff oder einem Leuchtstoffgemisch versehen sind, der oder das ausgebildet ist, um das von der jeweiligen LED primär emittierte Licht in blaues oder grünes oder rotes oder gelbes oder oranges Licht zu konvertieren und/oder dass die weißen LEDs derart ausgebildet sind, dass sie alle primär Licht der gleichen Farbe, insbesondere alle ultraviolettes oder alle blaues Licht emittieren, wobei die weißen LEDs jeweils mit einem Leuchtstoff oder einem Leuchtstoffgemisch versehen sind, der oder das ausgebildet ist, um das von der jeweiligen LED primär emittierte Licht in weißes Licht zu konvertieren.

13. Leuchte nach Anspruch 12, **dadurch gekennzeichnet, dass** zumindest einige der unterschiedlich farbigen LEDs und/oder die weißen LEDs als vollkonvertierte Leuchtstoff-LEDs ausgebildet sind.
